# NEUE EUROPÄISCHE PATENTSCHRIFT

(11) **EP 0 222 932 B2**
(45) Veröffentlichungstag und Bekanntmachung des Hinweises auf die Entscheidung über den Einspruch: **13.01.1999**
(45) Hinweis auf die Patenterteilung: 26.08.1992
(21) Anmeldenummer: 85115280.1
(22) Anmeldetag: 02.12.1985
(51) Int. Cl.: C04B 28/00

(54) **Verfahren zur Herstellung eines Bau- und/oder Konstruktionsmaterials; polymermodifizierte, wässrige Dispersion; und Verwendung derselben zur Herstellung eines Bau- und/oder Konstruktionsmaterials**
Process for the production of a building or construction material, aqueous polymer-modified dispersion and its use in the production of building or construction material
Procédé pour la fabrication d'un matériau de construction, dispersion aqueuse modifiée par un polymère et son utilisation pour la fabrication d'un matériau de construction

(30) Priorität: 22.11.1985 CH 4997/85
(43) Veröffentlichungstag der Anmeldung: 27.05.1987
(73) Patentinhaber: Sika AG, vorm. Kaspar Winkler & Co., CH-8048 Zürich (CH)
(72) Erfinder: Bürge, Theodor A., CH-8954 Geroldswil (CH); Schweizer, Reinhard, CH-8400 Winterthur (CH)
(74) Vertreter: Blum, Rudolf Emil Ernst

(56) Entgegenhaltungen:
- CH-A- 574 880
- DE-A- 2 449 211
- DE-A- 3 343 948
- FR-A- 2 058 431
- GB-B- 2 131 409
- JP-A-56 024 416
- NL-A- 8 502 007
- NO-A- 154 801
- NO-A- 841 458
- US-A- 3 836 504
- US-A- 4 088 804
- Aerosil Prospekt (DEGUSSA) 1988

## Beschreibung

Die vorliegende Erfindung betrifft ein Verfahren zur Herstellung eines Bau- und/oder Konstruktionsmaterials; eine polymermodifizierte, wässrige Dispersion; und die Verwendung derselben zur Herstellung eines Bau- und/oder Konstruktionsmaterials.

Die Eigenschaften eines mit Wasser aushärtenden Bau- und Konstruktionsmaterials hängen weitgehend von den Eigenschaften der Bindemittel-Matrix ab. Diese Matrix ist verantwortlich, dass die Zuschlagstoffe sowie gegebenenfalls Armierungselemente, Fasern, Drähte, Netze usw. möglichst gut miteinander verbunden werden. Die Porosität dieser Matrix wiederum ist entscheidend für die Festigkeit, die Dauerhaftigkeit, den Verschleisswiderstand und viele andere Gebrauchseigenschaften. Dabei steht die Porosität in einem umgekehrten Verhältnis zur Qualität und Dauerhaftigkeit, d.h. je tiefer die Porosität desto höher die Qualität resp. die Dauerhaftigkeit.

Eine solche Matrix mit höchsten Festigkeiten kann gemäss AT-PS 312 490 und CH-PS 574 880 durch Zusatz von amorphem Siliciumdioxid und eines Verflüssigers zu Zement erreicht werden.

In der DE-OS 33 43 948 wird ein Betonzusatzmittel in Form eines Mehrkomponentengemisches beschrieben, das als essentielle Bestandteile ein oder mehrere Wasserreduzierungsmittel und/oder hochgradige Wasserreduzierungsmittel dispergiert in Mikrosiliciumdioxid enthält. Vorzugsweise ist dieses Mehrkomponentengemisch in Wasser oder einer organischen Flüssigkeit aufgeschlämmt.

Auf den Seiten 5 und 6 dieser DE-OS 33 43 948 werden die sechs verwendbaren Klassen an Wasserreduzierungsmitteln, beziehungsweise die drei verwendbaren Klassen an hochgradigen Wasserreduzierungsmiteteln genannt. Es handelt sich dabei hauptsächlich um anorganische Stoffe und organische Stoffe niedrigen Molekulargewichts. Sofern Polymermaterialien genannt sind, handelt es sich um wasserlösliche Polymermaterialien. Es sei in diesem Zusammenhang darauf hingewiesen, dass die auf Seite 6 unter Punkt 2 erwähnten Melaminderivate sulfonierte Kondensate von Melamin und Formaldehyd sind, und auch bei den unter Punkt 3 genannten Naphthalinderivaten handelt es sich um sulfonierte Kondensate von Naphthalin und Formaldehyd (siehe Seite 6, dritter Abschnitt von unten). Diese Polymermaterialien sind also aufgrund ihrer hydrophilen Gruppen wasserlöslich.

Die in dieser DE-OS 33 43 948 beschriebenen Slurries aus Wasserreduzierungsmittel und Mikrosiliciumdioxid können dem Beton, zusammen mit einem Luftporenbildner, zugesetzt werden, um einen Luftporenbeton ohne Festigkeitsverlust herzustellen. Ohne zusätzliche Stabilisierung können aber diese Mischungen nicht über längere Zeit gelagert werden, da sie gelieren und dadurch nur noch mit grösster Mühe weiterverarbeitet werden können.

Es ist auch bereits versucht worden, bei der Herstellung von Bau- und/oder Konstruktionsmaterialien, wie Beton, wasserunlösliche Polymermaterialien zuzusetzen.

Ueberraschenderweise zeigte es sich jetzt, dass durch die Zugabe einer wässrigen Dispersion, welche sowohl amorphes Siliciumdioxid als auch ein emulgiertes und/oder dispergiertes Polymer enthält, ein synergistischer Effekt erzielt wird und so Zusammensetzungen hergestellt werden können, die hohe Biege-, Zug- und Druckfestigkeiten aufweisen.

Ein Gegenstand der vorliegenden Erfindung ist daher ein Verfahren zur Herstellung eines Bau- und/oder Konstruktionsmaterials, bei welchem eine polymermodifizierte, wässrige Dispersion, enthaltend amorphes Siliciumdioxid und wenigstens ein Polymer, mit wenigstens einem anorganischen Bindemittel gemischt und zur Reaktion gebracht wird und dabei aushärtet, wobei dieses Verfahren dadurch gekennzeichnet ist, dass die polymermodifizierte, wässrige Dispersion wenigstens ein in Wasser emulgiergtes und/oder dispergiertes Polymer enthält welches jedoch kein Epoxidharz mit Hydroxylgruppen ist und dass das in der Dispersion enthaltene amorphe Siliciumdioxid eine spezifische Oberfläche (BET) gemäss Brunauer-Emmet-Teller von 10 - 400 m²/g besitzt und einen SiO₂-Gehalt von 50 - 100 Gew.-% aufweist.

Bevorzugte, in der Dispersion enthaltene Polymermaterialien, sind im Wasser emulgierte, Epoxidharze und Polyaminhärter; in Wasser dispergierte Homo- und Copolymere von Vinylestern, Acrylsäureestern, Styrol, Butadien und Vinylhalogenverbindungen.

Gegebenenfalls kann die Dispersion, zusätzlich zu dem in Wasser emulgierten oder dispergierten Polymer, noch ein wasserlösliches Polymer enthalten.

Ein weiterer Gegenstand der vorliegenden Erfindung ist eine polymermodifizierte wässrige Dispersion, enthaltend amorphes Siliciumdioxid und wenigstens ein Polymer, wobei diese polymermodifizierte Dispersion dadurch gekennzeichnet ist, dass sie wenigstens ein in Wasser emulgiertes und/oder dispergiertes Polymer enthält welches jedoch kein Epoxidharz mit Hydroxylgruppen ist und dass die Dispersion amorphes Siliciumdioxid mit einer spezifischen Oberfläche (BET) gemäss Brunauer-Emmet-Teller von 10 - 400 m²/g und einem SiO₂-Gehalt von 50 - 100 Gew.-% enthält.

Schliesslich betrifft die vorliegende Erfindung die Verwendung dieser polymermodifizierten wässrigen Dispersion zur Herstellung eines Bau- und/oder Konstruktionsmaterials.

Bevorzugte Ausführungsformen der Erfindung sind in den abhängigen Ansprüchen definiert.

Amorphes Siliciumdioxid, welches in den erfindungsgemässen Dispersionen enthalten ist, fällt beispielsweise als Nebenprodukt bei der Herstellung von Silicium, Ferrosilicium oder bei der Verbrennung von siliciumdioxidhaltigen Pflanzenteilen, wie beispielsweise Reisschalen oder Tonf,an. Selbstverständlich kann auch chemisch hergestelltes oder pyrogenes Siliciumdioxid verwendet werden.

Der aktive Gehalt an amorphem Siliciumdioxid beträgt je nach Herstellverfahren zwischen 50 und 100 Gew.-% und die spezifische Oberfläche (BET) gemäss Brunauer-Emmet-Teller beträgt 10-30 m²/g, wobei die obere Grenze bei 400 m²/g liegt. Die Kombination von Polymeren mit amorphem Siliciumdioxid macht es möglich, die Porosität einer Zementmatrix um bis zu 85 % zu verringern. Damit kommt man in einen Bereich von keramikartigen Eigenschaften und die Druckfestigkeiten sind entsprechend hoch und erreichen über 150 MPa. Dadurch bedingt sind auch die Haftfestigkeiten enorm hoch, womit es möglich wird, auch glatte, natürliche, synthetische Fasern und Stahlfasern so zu verankern, dass sie beim Zugversuch nicht aus der Matrix herausgleiten, sondern reissen.

**Tabelle 1**

| Druck- und Haftfestigkeit (Ausreissfestigkeit) | | |
|---|---|---|
| Portlandzement 100 Gewichtsteile | | |
| Erfindungsgemässe Dispersion gemäss nachfolgendem Beispiel 4: 0-40 Gewichtsteile | | |

| Erfindungsgemässe Dispersion | 28 Tage Druckfestigkeiten N/mm² | 28 Tage Ausreissfestigkeit von Stahl N/mm² |
|---|---|---|
| 0 Gew.-Teile | 75 | 1.2 |
| 5 Gew.-Teile | 115 | 2.5 |
| 20 Gew.-Teile | 130 | 4.0 |
| 40 Gew.-Teile | 170 | 4.5 |

Als Polymere können sowohl in Wasser emulgierte oder dispergierte Kunststoffe oder Kunstharze verwendet werden. Diese Polymere können einkomponentig, physikalisch erhärtend oder mehrkomponentig durch chemische Reaktion aushärtend sein. Sie gehören den Klassen Thermoplaste, Duroplaste oder Elastomere an.

Nebst der Herstellung von hochfesten Erzeugnissen kann man die Matrix auch verwenden, um dünnere Elemente mit gleicher Gebrauchsfähigkeit und Tragsicherheit oder durch Zusatz von Leichtzuschlagstoffen und/oder Luftporen mit gleichen Festigkeiten herzustellen.

**Tabelle 2**

| Leichtbeton gleicher 28 Tage Druckfestigkeiten | | |
|---|---|---|
| Portlandzement 80 Gewichtsteile | | |
| Erfindungsgemässe Dispersion gemäss nachfolgendem Beispiel 4: 0-40 Gewichtsteile | | |
| Luftporenbildner 0-10 Gewichtsteile | | |
| Blähton 0-15 mm 268 Gewichtsteile | | |
| Quarzsand 0-0.5 mm 96 Gewichtsteile | | |

| Dichte t/m³ | 28 Tage Druckfestigkeiten N/mm² | |
|---|---|---|
| | Erfindungsgemässe Dispersion | |
| | 0 Gewichtsteile | 40 Gewichtsteile |
| 1.45 | 20 | 36 |
| 1.55 | 28 | 47 |
| 1.65 | 32 | 51 |
| 1.75 | 50 | 62 |

Anstatt die möglichen hohen Festigkeiten von beispielsweise Beton zu realisieren, kann man bei gleichbleibenden Festigkeiten den Zementgehalt reduzieren und zwar pro Gewichtsteil der erfindungsgemässen Dispersion 2-4 Gewichtsteile Zement.

Die die erfindungsgemässe Dispersion enthaltende Matrix mit extrem geringer Porosität kann mit entsprechenden Füllstoffen für die Herstellung hochabrasionsbeständiger Elemente verwendet werden. Da das amorphe Siliciumdioxid den freien Kalk des Zementes bindet, können chemisch resistente Produkte hergestellt werden. Sie verhindert ebenfalls die Alkali-Silikat-Reaktion.

**Tabelle 3**

| Sulfatbeständigkeit | | |
|---|---|---|
| Prismen 4 x 4 x 16 cm³ | | |
| Portlandzement 100 Gewichtsteile | | |
| Erfindungsgemässe Dispersion gemäss nachfolgendem Beispiel 1: 20 Gewichtsteile | | |
| Sand 0-3 mm 300 Gewichtsteile | | |
| Wasser-Zementfaktor 0.4 | | |
| Lagerung in 5 %iger Natriumsulfatlösung | | |

| Alter der Proben in Tagen | Expansionsmessungen ^{o}/oo | |
|---|---|---|
| | Erfindungsgemässe Dispersion | |
| | 0 Gewichtsteile | 20 Gew.-Teile |
| 3 | 0.142 | 0.071 |
| 7 | 0.213 | 0.106 |
| 28 | 0.248 | 0.106 |
| 56 | 0.390 | 0.106 |
| 90 | 0.497 | 0.106 |
| 180 | 1.136 | 0.177 |
| 360 | zerstört | 0.355 |

Den Anwendungsmöglichkeiten der erfindungsgemässen polymermodifizierten wässrigen Dispersion aus amorphem Siliciumdioxid sind kaum Grenzen gesetzt; sie reichen von Kalk-, Gips- zu Magnesiumphosphat und Zementmörteln, von Leicht- zu Normal- und Schwerbeton zu faserarmierten Produkten, Asbest-Ersatz, Spritzmörtel und -beton, zum Metallersatz in Giessereien und zum Keramikersatz.

Ueberraschend konnte auch gefunden werden, dass das Gelieren der polymermodifizierten Dispersion aus amorphen Siliciumdioxid verhindert wird, wenn man bei der Herstellung eine polymere Säure als Dispergiermittel sowie organische Hydroxyl-, Polyhydroxyl- und/oder Stickstoffverbindungen als Viskositätsregler zugibt.

Die Herstellung der erfindungsgemässen Dispersion geschieht am besten auf einem hochtourigen Mischer (Dissolver), wobei vorzugsweise zuerst das Dispergierhilfsmiftel und der Viskositätsregler im Wasser vorgelöst wird, dann wird das amorphe Siliciumdioxid daruntergemischt und homogen verteilt. Anschliessend folgt die Zugabe des oder der Polymeren und gegebenenfalls Abbindebeschleuniger oder -verzögerer.

### Beispiel 1

20 Gew.-% Styrol-Butylacrylat-Copolymer
25 Gew.-% amorphes Siliciumdioxid
7.5 Gew.-% sulfoniertes Amino-s-Triazinharz
46.5 Gew.-% Wasser
1.0 Gew.-% Aethylenglykol

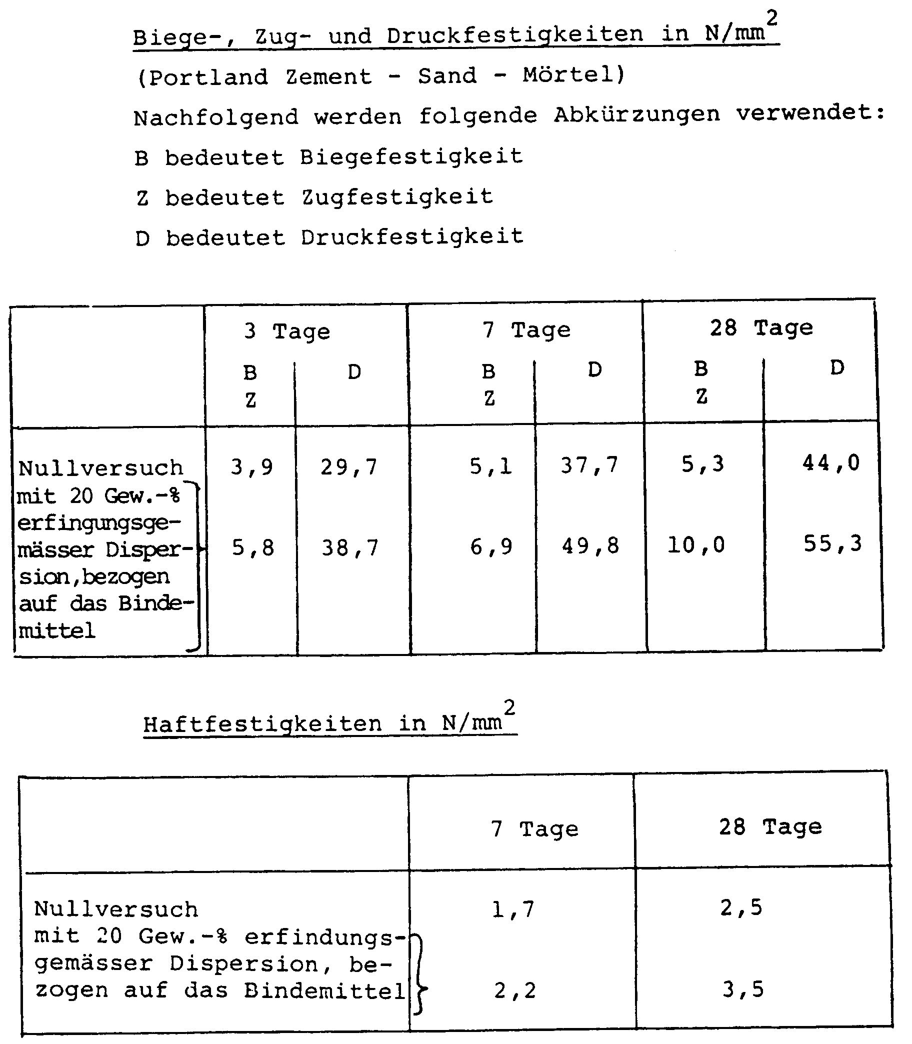

### Beispiel 2

25.0 Gew.-% Wasser
2.5 Gew.-% Harnstoff
25.0 Gew.-% amorphes Siliciumdioxid
5.0 Gew.-% sulfoniertes Amino-s-Triazinharz
40.0 Gew.-% Styrol-Butylacrylat-Dispersion
2.5 Gew.-% Natriumdihydrogenphosphat

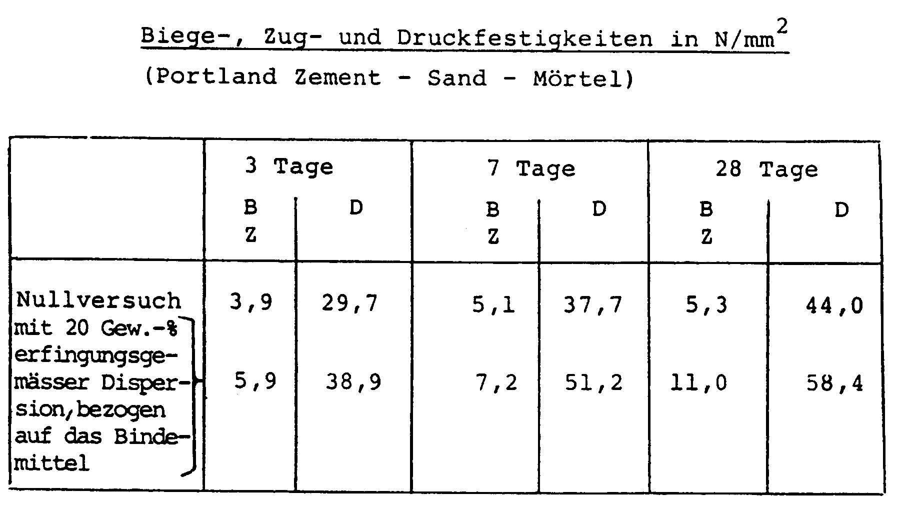

### Beispiel 3

- Dispersion A:: 38 Gew.-% Wasser
2 Gew.-% polymere Acrylsäure
25 Gew.-% amorphes Siliciumdioxid
4 Gew.-% Naphthalinsulfonsäure-Formaldehyd-Kondensat
31 Gew.-% hydroxylgruppenfreien Epoxidharz
- Dispersion B:: 45 Gew.-% Wasser
2 Gew.-% polymere Acrylsäure
35 Gew.-% amorphes Siliciumdioxid
5 Gew.-% Naphthalinsulfonsäure-Formaldehyd-Kondensat
13 Gew.-% Epoxidharz-Härter

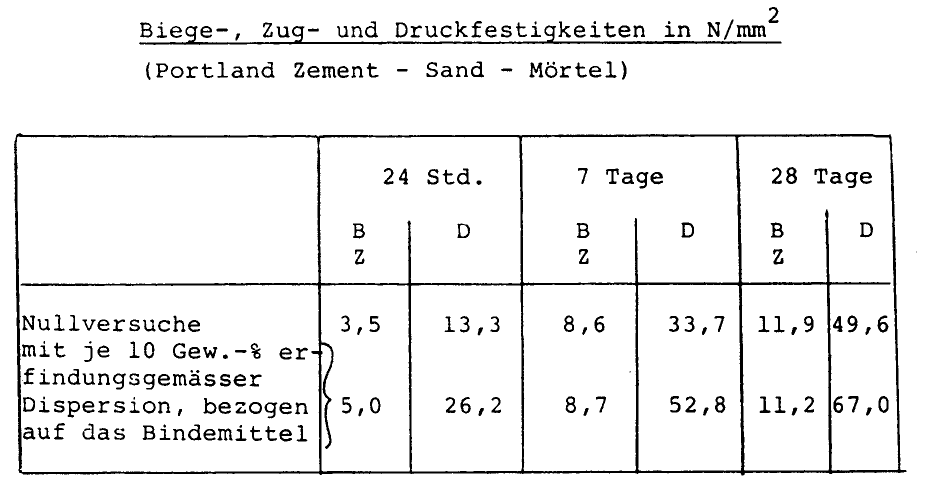

### Beispiel 4

54,3 - 68,9 Gew.-% Wasser
2,0 Gew.-% polymere Acrylsäure
20,0 Gew.-% amorphes Siliciumdioxid
4,5 Gew.-% sulfoniertes Amino-s-Triazinharz
4,6 - 19,2 Gew.-% Styrol-Butadien Copolymer

| Biege-, Zug- und Druckfestigkeiten in N/mm² (Portland Zement - Sand - Mörtel) | | | | | | | | | |
|---|---|---|---|---|---|---|---|---|---|
| Mörtel mit 4,6 Gew.-% Styrol-Butadien-Copolymer 10 im Vergleich zu erfindungsgemässen Dispersionen mit abnehmendem Gehalt an Styrol-Butadien Copolymer. | | | | | | | | | |

| erfindungsgemässe Dispersion | Gew.-% Copolymer | 24 Std. | | 3 Tagen | | 7 Tagen | | 28 Tagen | |
|---|---|---|---|---|---|---|---|---|---|
| | | BZ | D | BZ | D | BZ | D | BZ | D |
| ohne | 4,6 | 4,3 | 17,0 | 4,4 | 28,2 | 6,0 | 36,2 | 7,8 | 43,1 |
| mit | 2,3 | 4,8 | 21,4 | 4,9 | 36,0 | 7,3 | 44,3 | 7,4 | 49,9 |
| mit | 1,725 | 4,9 | 20,7 | 5,3 | 35,2 | 7,1 | 43,8 | 8,0 | 49,7 |
| mit | 1,15 | 4,7 | 20,9 | 5,5 | 35,9 | 6,6 | 44,8 | 9,0 | 46,9 |
| mit | 0,575 | 5,1 | 20,7 | 5,3 | 36,2 | 6,4 | 45,0 | 8,8 | 48,4 |

## Patentansprüche

1. Verfahren zur Herstellung eines Bau- und/oder Konstruktionsmaterials, bei welchem eine polymermodifizierte, wässrige Dispersion, enthaltend amorphes Siliciumdioxid und wenigstens ein Polymer, mit wenigstens einem anorganischen Bindemittel gemischt und zur Reaktion gebracht wird und dabei aushärtet, dadurch gekennzeichnet, dass die polymermodifizierte, wässrige Dispersion wenigstens ein in Wasser emulgiertes und/oder dispergiertes Polymer enthält, welches jedoch kein Epoxidharz mit Hydroxylgruppen ist, und dass das in der Dispersion enthaltene amorphe Siliciumdioxid eine spezifische Oberfläche (BET) gemäss Brunauer-Emmet-Teller von 10 - 400 m²/g besitzt und einen SiO₂-Gehalt von 50 - 100 Gew.-% aufweist.

2. Verfahren nach Anspruch 1, dadurch gekennzeichnet, dass die polymermodifizierte, wässrige Dispersion folgende Zusammensetzung aufweist:
1 - 60 Gew.-% wenigstens eines in Wasser emulgierten und/oder dispergierten Polymers
5 - 75 Gew.-% amorphes Siliciumdioxid und
24-94 Gew.-% Wasser und
dass die Dispersion vorzugsweise noch zusätzlich mindestens eine der folgenden Komponenten enthält:
0 - 5 Gew.-% wenigstens eines Dispergierhilfsmittels
0 - 15 Gew.-% wenigstens eines Viskositätsreglers
0 - 20 Gew.-% wenigstens eines Verflüssigers und/oder Abbindeverzögerers und/oder Abbindebeschleunigers und
0 - 30 Gew.-% wenigstens einer anorganischen Phosphor enthaltenden Verbindung
und dass diese Dispersion, bezogen auf das Bindemittel, in einer Menge von 5 - 100 Gew.-% zugesetzt wird.

3. Verfahren nach Anspruch 1 oder 2, dadurch gekennzeichnet, dass die Dispersion im Wasser emulgierte Epoxidharze, welches jedoch kein Epoxidharz mit Hydroxylgruppen ist, und Polyaminhärter; in Wasser dispergierte Homo- und Copolymere von Vinylestern, Acrylsäureestern, Styrol, Butadien und Vinylhalogenverbindungen enthält.

4. Verfahren nach einem der Ansprüche 1 bis 3,dadurch gekennzeichnet, dass die Dispersion zusätzlich zu den in Wasser emulgierten und/oder dispergierten Polymeren noch mindestens ein in Wasser gelöstes Polymer enthält, vorzugsweise eines, das aus der Gruppe ausgewählt ist, welche die folgenden, in Wasser gelösten Polymeren umfasst:
sulfonierte Amino-s-triazinharze, Sulfaminsäure-Melamin Harze, Harnstoffharze, Aldehydharze von aromatischen Sulfonsäuren und carboxylierte Harze.

5. Verfahren gemäss einem der Ansprüche 1 bis 4, dadurch gekennzeichnet, dass als anorganische Bindemittel Zemente, z.B. Portlandzemente gemäss ASTM C 150; Weisszemente, Tonerdeschmelzzemente; Mischzemente mit Flugasche, Schlacke, Puzzolan; Calciumhydroxid; Calciumsulfat-Dihydrat, Calciumsulfat-Hemihydrat; Calciumsulfat-Anhydrid, Calciumoxid; Magnesiumoxid, Magnesiumhydroxid verwendet werden.

6. Verfahren gemäss einem der Ansprüche 1 bis 5, dadurch gekennzeichnet, dass als Zuschlagstoffe natürliche kalkhaltige oder silikatische Sande und Kies, Quarz, Basalt und/oder künstlich hergestellte Materialien, Siliciumcarbid, Aluminiumoxid, Borkarbid, Eisen, Eisenkarbid, Blähton, Blähschiefer, Perlit, Vermiculit, geschäumte Kunststoffe, Glasmicrospheren oder geblähte Flugasche verwendet werden.

7. Verfahren gemäss einem der Ansprüche 1 bis 6, dadurch gekennzeichnet,dass als Dispergierhilfsmittel Polyacrylsäure eingesetzt wird.

8. Verfahren gemäss einem der Ansprüche 1 bis 7, dadurch gekennzeichnet, dass als Viskositätsregler einwertige und/oder mehrwertige Alkohole, und/oder Glykoläther und/oder Verbindungen der allgemeinen Formel 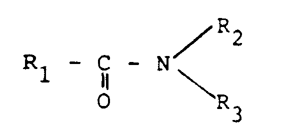 eingesetzt werden,
wobei
R₁ NH₂- oder -(CH₂)ₙ- ist
R₂ H- oder -(CH₂)ₘ- ist
R₃ H- oder eine Alkylgruppe, insbesondere -CH₃, ist,
wobei n und m je die Zahlen 1 bis 5 bedeuten.

9. Verfahren gemäss einem der Ansprüche 1 bis 8, dadurch gekennzeichnet, dass als Verflüssiger sulfonierte Melamin-Formaldehydharze, sulfonierte Naphthalin-Formaldehydharze, Ligninsulfonate, Salze von Polyhydroxycarbonsäuren; als Abbindeverzögerer Polyhydroxylverbindungen, Phosphate; und als Abbindebeschleuniger Aluminiumhydroxid, Calciumsulfat eingesetzt wird.

10. Verfahren gemäss einem der Ansprüche 1 bis 9, dadurch gekennzeichnet, dass als Phosphor enthaltende Verbindung Ortho-, Pyro-, Polyphosphorsäure oder deren sauer reagierende Salze ein- und mehrwertiger Kationen eingesetzt werden.

11. Polymermodifizierte wässrige Dispersion, enthaltend amorphes Siliciumdioxid und wenigstens ein Polymer, dadurch gekennzeichnet, dass die polymermodifizierte Dispersion wenigstens ein in Wasser emulgiertes und/oder dispergiertes Polymer enthält, welches jedoch kein Epoxidharz mit Hydroxylgruppen ist, und dass die Dispersion amorphes Siliciumdioxid mit einer spezifischen Oberfläche (BET) gemäss Brunauer-Emmet-Teller von 10 - 400 m²/g und einem SiO₂-Gehalt von 50 - 100 Gew.-% enthält.

12. Dispersion gemäss Anspruch 11, dadurch gekennzeichnet, dass sie folgende Zusammensetzung aufweist:
1 - 60 Gew.-% wenigstens eines in Wasser emulgierten und/oder dispergierten Polymers
5 - 75 Gew.-% amorphes Siliciumdioxid und
24-94 Gew.-% Wasser und
dass diese polymermodifizierte wässrige Dispersion gegebenenfalls noch zusätzlich mindestens eine der folgenden Komponenten enthält:
0 - 5 Gew.-% wenigstens eines Dispergierhilfsmittels
0 - 15 Gew.-% wenigstens eines Viskositätsreglers
0 - 20 Gew.-% wenigstens eines Verflüssigers und/oder Abbindeverzögerers und/oder Abbindebeschleunigers und
0 - 30 Gew.-% wenigstens einer anorganischen Phosphor enthaltenden Verbindung.

13. Dispersion gemäss Anspruch 11 oder 12, dadurch gekennzeichnet, dass die in Wasser emulgierten oder dispergierten Polymeren ausgewählt sind aus in Wasser emulgierten hydroxylgruppenfreien Epoxidharzen und Polyaminhärtern; in Wasser dispergierten Homo- und Copolymeren von Vinylestern, Acrylsäureestern, Styrol, Butadien und Vinylhalogenverbindungen.

14. Dispersion gemäss einem der Ansprüche 11 bis 13, dadurch gekennzeichnet, dass die Dispersion zusätzlich zu den in Wasser emulgierten und/oder dispergierten Polymeren noch mindestens ein in Wasser gelöstes Polymeres enthält, vorzugsweise eines, das aus der Gruppe ausgewählt ist, welche die folgenden in Wasser gelösten Polymeren umfasst: sulfonierte Amino-s-triazinharze, Sulfaminsäure-Melamin Harze, Harnstoffharze, Aldehydharze von aromatischen Sulfonsäuren und carboxylierte Harze.

15. Dispersion gemäss einem der Ansprüche 11 bis 14, dadurch gekennzeichnet, dass sie als Dispergierhilfsmittel Polyacrylsäure enthält.

16. Dispersion gemäss einem der Ansprüche 11 bis 15, dadurch gekennzeichnet, dass sie als Viskositätsregler einwertige und/oder mehrwertige Alkohole,und/oder Glykolaether und/oder Verbindungen der allgemeinen Formel 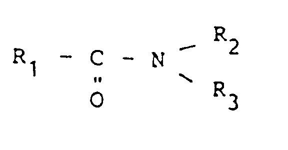 wobei
R₁ NH₂- oder -(CH₂)ₙ- ist
R₂ H- oder -(CH₂)ₘ- ist
R₃ H- oder eine Alkylgruppe, insbesondere -CH₃, ist,
wobei n und m je die Zahlen 1 bis 5 bedeuten,
enthält.

17. Dispersion gemäss einem der Ansprüche 11 bis 16, dadurch gekennzeichnet, dass sie als Verflüssiger sulfonierte Melamin-Formaldehydharze, sulfonierte Naphthalin-Formaldehydharze, Ligninsulfonate, Salze von Polyhydroxycarbonsäuren; als Abbindeverzögerer Polyhydroxylverbindungen, Phosphate; und als Abbindebeschleuniger Aluminiumhydroxid, Calciumsulfat enthält.

18. Dispersion gemäss einem der Ansprüche 11 bis 17, dadurch gekennzeichnet, dass sie als Phosphor enthaltende Verbindung Ortho-, Pyro-, Polyphosphorsäure oder deren sauer reagierende Salze ein- und mehrwertiger Kationen enthält.

19. Verwendung der polymermodifizierten, wässrigen Dispersion nach einem der Ansprüche 11 bis 18 zur Herstellung eines Bau- und/oder Konstruktionsmaterials.

## Claims

1. Process for the production of a building and/or construction material in which a polymer-modified aqueous dispersion containing amorphous silicon dioxide and at least one polymer is mixed with at least one inorganic binder and reacted and thereby hardened or set, characterised in that the polymer-modified aqueous dispersion contains at least one polymer emulsified and/or dispersed in water but which is not an epoxy resin with hydroxyl groups and that the amorphous silicon dioxide contained in the dispersion has a specific surface (BET) according to Brunauer-Emmet-Teller of 10-400m²/g and an SiO₂ content of 50-100% by weight.

2. Process according to Claim 1, characterised in that the polymer-modified aqueous dispersion has the following composition:
1-60% by weight of at least one polymer emulsified and/or dispersed in water
5-75% by weight of amorphous silicon dioxide and
24-94% by weight of water and
that the dispersion preferably contains in addition at least one of the following components:
0-5% by weight of at least one dispersing agent
0-15% by weight of at least one viscosity regulator 0-20% by weight of at least one fluidiser and/or reaction accelerator and/or reaction retarder and
0-30% by weight of at least one inorganic phosphorus-containing compound
and that this dispersion is added in a quantity of 5-100% by weight with reference to the binder.

3. Process according to Claim 1 or Claim 2 characterised in that the dispersion contains epoxy resins but which is not an epoxy resin with hydroxyl groups and polyamine hardener emulsified in the water; homo-and copolymers, of vinyl esters, acrylic acid esters, styrene, butadieine and vinyl halogen compounds dispersed in water.

4. Process according to one of Claims 1 to 3 characterised in that the dispersion contains in addition to the polymers emulsified and/or dispersed in water, at least one polymer dissolved in water, preferably one selected from the group which embraces the following polymers dissolved in water:
sulphonated amino-s-triazine resins, sulphaminic acid-melamine resins, urea resins, aldehyde resins of aromatic sulphonic acids and carboxylic resins.

5. Process according to one of Claims 1 to 4, characterised in that there are employed as inorganic binder, cements, eg. Portland cements according to ASTM C 150; White cements, Alumina cements; mixed cements with fly ash, slag, pozzuolana; calcium hydroxide; calcium sulphate-dihydrate, calcium sulphate hemi-hydrate, calcium sulphate-anhydride, calcium oxide; magnesium oxide, magnesium hydroxide.

6. Process according to one of Claims 1 to 5, characterised in that there are employed as additives natural calcareous or siliceous sands and gravels, quartz, basalt and/or artificially produced material, silicon carbide, aluminium oxide, boron carbide, iron, iron carbide, expanded clay, expanded shale, perlite, vermiculite, foamed plastics, glass micro-spheres or expanded fly-ash.

7. Process according to one of Claims 1 to 6 characterised in that polyacrylic acid is employed as a dispersing medium.

8. Process according to one of Claims 1 to 7, characterised in that there is employed as the viscosity regulator mono hydroxy and/or poly-hydroxy alcohols, and/or glycol ethers and/or compounds of the general formula 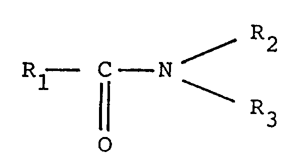 where
R₁ is NH₂- or -(CH₂)ₙ-
R₂ is H- or (CH₂)ₘ-
R₃ is H- or an alkyl group in particular -CH₃,
n and m each signifying the number 1 to 5.

9. Process according to one of Claims 1 to 8, characterised in that there is introduced as fluidiser sulphonated melamine-formaldehyde resins, sulphonated napthalene-formaldehyde resins, lignin sulphonate, salts of polyhydroxy-carbonic acids; as reaction retarder poly-hydroxyl compounds, phosphates; and as reaction accelerator aluminium hydroxide, calcium sulphate.

10. Process according to one of Claims 1 to 9, characterised in that there are introduced as the phosphorus-containing compound ortho-, pyro-, poly-phosphoric acids or their single and multi-valent cation acid salts.

11. Polymer-modified aqueous dispersion containing amorphous silicon dioxide and at least one polymer, characterised in that the polymer-modified dispersion contains at least one polymer emulsified and/or dispersed in water but which is not an epoxy resin with hydroxyl groups and that the dispersion contains amorphous silicon dioxide having a specific surface (BET) according to Brunauer-Emmet-Teller of 10-400m²/g and an SiO₂ content of 50-100% by weight.

12. Dispersion according to Claim 11, characterised in that it has the following composition:
1-60% by weight of at least one polymer emulsified and/or dispersed in water
5-75% by weight of amorphous silicon dioxide and
24-94% by weight of water and
that this polymer-modified aqueous dispersion possibly contains in addition at least one of the following components:
0-5% by weight of at least one dispersing agent
0-15% by weight of at least one viscosity regulator
0-20% by weight of at least one fluidiser and/or reaction retarder and/or reaction accelerator and
0-30% by weight of at least one compound containing inorganic phosphorus.

13. Dispersion according to claim 11 or claim 12, characterised in that the polymers which are emulsified or dispersed in water are selected from hydroxyl-group-free epoxy resins and polyamine hardeners emulsified in water; homo-and copolymers, of vinyl esters, acrylic acid esters, styrene, butadiene and vinyl halogen compounds dispersed in water.

14. Dispersion according to one of Claims 11 to 13, characterised in that the dispersion contains, in addition to the polymers emulsified and/or dispersed in water, also at least one polymer dissolved in water, preferably one selected from the group which embraces the following polymers dissolved in water:
sulphonated amino-s-triazine resins, sulphaminic acid - melamine resins, urea resins, aldehyde resins or aromatic sulphonic acids and carboxylic resins.

15. Dispersion according to one of Claims 11 to 14, characterised in that it contains polyacrylic acid as a dispersing agent.

16. Dispersion according to one of claims 11 to 15, characterised in that it contains as viscosity regulators mono-hydroxyl and/or poly-hydroxyl alcohols, and/or glycol ether and/or compounds of the general formula 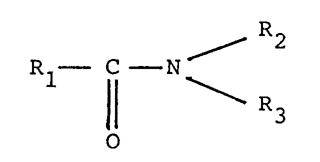 where
R₁ is NH₂- or -(CH₂)ₙ-
R₂ is H- or (CH₂)ₘ-
R₃ is H- or an alkyl group in particular -CH₃,
n and m each signifying the number 1 to 5.

17. Dispersion according to one of Claims 11 to 16 characterised in that it contains as fluidiser sulphonated melamine-formaldehyde resins, sulphonated napthalene-formaldehyde resins, lignin sulphonate, salts of polyhydroxy carbonic acids; as reaction retarder poly-hydroxyl compounds, phosphates; and as reaction accelerator aluminium hydroxide, calcium sulphate.

18. Dispersion according to one of Claims 11 to 17, characterised in that it contains as the phosphorus-containing compound ortho-,pyro-,poly phosphoric acids or their single-and multi-valent cation acid salts.

19. The use of the polymer-modified aqueous dispersion according to one of Claims 11 to 18 in the production of a building and/or construction material.

## Revendications

1. Procédé de fabrication d'un matériau pour le bâtiment et/ou la construction chez lequel on mélange une dispersion aqueuse, à modification polymérique, contenant du dioxyde de silicium amorphe et au moins un polymère, avec au moins un liant inorganique et que l'on amène à réagir de façon à en provoquer ainsi le durcissement, caractérisé en ce que la dispersion aqueuse, à modification polymérique, contient au moins un polymère émulsionnable et/ou dispersible dans l'eau, qui ne contient cependant pas de résine époxyde à groupes hydroxyle et en ce que le dioxyde de silicium amorphe contenu dans la dispersion possède une surface spécifique selon Brunauer-Emmet-Teller (BET) de 10 à 400 m²/g et présente une teneur en SiO₂ de 50 à 100% en poids.

2. Procédé suivant la revendication 1, caractérisé en ce que la dispersion aqueuse, à modification polymérique, présente la composition qui suit :
1 à 60% en poids d'au moins un polymère émulsionné et/ou dispersé dans l'eau,
5 à 75% en poids de dioxyde de silicium amorphe et
24 à 94% en poids d'eau et
en ce que la dispersion contient, de préférence encore complémentairement au moins l'un des composants qui suivent :
0 à 5% en poids d'au moins un adjuvant de dispersion
0 à 15% en poids d'au moins un régulateur de viscosité
0 à 20% en poids d'au moins un fluidifiant ou plastifiant et/ou d'un retardateur de prise et/ou d'un accélérateur de prise et
0 à 30% en poids d'au moins un composé inorganique contenant du phosphore
et en ce que l'on ajoute la dispersion en une proportion de 5 à 100% en poids, par rapport au liant.

3. Procédé suivant la revendication 1 ou 2, caractérisé en ce que la dispersion contient des résines époxydes, qui ne contiennent cependant pas de résine époxyde à groupes hydroxyle et des durcisseurs du type polyamine ou polyaminés, des homopolymères et copolymères, dispersés dans l'eau, d'esters vinyliques, d'esters de l'acide acrylique, du styrène, du butadiène et de composés vinyliques halogénés.

4. Procédé selon l'une quelconque des revendications 1 à 3, caractérisé en qu'outre les polymères émulsionnés et/ou dispersés dans l'eau, la dispersion contient encore au moins un polymère dissous dans de l'eau, de préférence un polymère choisi dans le groupe formé par les polymères dissous dans de l'eau qui suivent :
résines d'amino-s-triazine sulfonées, résines de mélamine et d'acide sulfamique, résines d'urée, résines d'aldéhydes d'acides sulfoniques aromatiques et résines carboxylées.

5. Procédé suivant l'une quelconque des revendications 1 à 4, caractérisé en ce que l'on utilise, à titre de liants inorganiques, des ciments, par exemple des ciments Portland selon ASTM C 150; des ciments blancs; des ciments de mélange ou naturels avec des cendres volantes; des pouzzolanes; de l'hydroxyde de calcium; du sulfate de calcium dihydraté, du sulfate de calcium hémihydraté; du sulfate de calcium-anhydrite, de l'oxyde de calcium; de l'oxyde de magnésium, de l'hydroxyde de magnésium.

6. Procédé suivant l'une quelconque des revendications 1 à 5, caractérisé en ce qu'à titre d'agrégats, on utilise des sables naturels contenant de la chaux ou silicatés et du gravier; du quartz, du basalte et/ou des matériaux artificiellement fabriqués, du carbure de silicium, de l'oxyde d'aluminium, du carbure de bore, du fer, du carbure de fer, de l'argile expansée, du schiste expansé, de la perlite, de la vermiculite, des matières plastiques expansées ou mousses, des microsphères de verre, des cendres volantes expansées ou gonflées.

7. Procédé suivant l'une quelconque des revendications 1 à 6, caractérisé en ce que l'on utilise de l'acide polyacrylique à titre d'adjuvant de dispersion.

8. Procédé suivant l'une quelconque des revendications 1 à 7, caractérisé, en ce que, à titre de régulateur de viscosité, on utilise des alcools monofonctionnels et/ou polyfonctionnels et/ou des éthers glycoliques et/ou des composés qui répondent à la formule générale 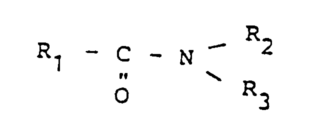 dans laquelle
R₁ représente un radical NH₂- ou -(CH₂)ₙ-,
R₂ représente un atome d'hydrogène ou un radical -(CH₂)ₘ-,
R₃ représente un atome d'hydrogène ou un radical alkyle, plus particulièrement -CH₃,
n et m représentant chacun des nombres dont la valeur varie de 1 à 5.

9. Procédé suivant l'une quelconque des revendications 1 à 8, caractérisé en ce que, à titre de fluidifiant, on utilise des résines de mélamine et de formaldéhyde sulfonées, des résines de naphtalène et de formaldéhyde sulfonées, des ligninesulfonates, des sels d'acides polyhydroxycarboxyliques; à titre de retardateurs de prise, des composés polyhydroxylés, des phosphates; et, à titre d'accélérateurs de prise, de l'hydroxyde d'aluminium, du sulfate de calcium.

10. Procédé suivant l'une quelconque des revendications 1 à 9, caractérisé en ce qu'à titre de composé contenant du phosphore, on utilise de l'acide orthophosphorique, pyrophosphorique, polyphosphorique ou leurs sels à réaction acide à cations mono- et polyvalents.

11. Dispersion aqueuse, à modification polymérique, contenant du dioxyde de silicium amorphe et au moins un polymère, caractérisée en ce qu'elle contient au moins un polymère émulsionné et/ou dispersé dans l'eau, qui ne contient cependant pas de résine époxyde à groupes hydroxyle et en ce que la dispersion contient un dioxyde de silicium amorphe possédant une surface spécifique selon Brunauer-Emmet-Teller (BET) de 10 à 400 m²/g et possède une teneur en SiO₂ qui varie de 50 à 100% en poids.

12. Dispersion suivant la revendication 11, caractérisée en ce qu'elle présente la composition suivante :
1 à 60% en poids d'au moins un polymère émulsionné et/ou dispersé dans l'eau,
5 à 75% en poids de dioxyde de silicium amorphe et
24 à 94% en poids d'eau et
en ce que la dispersion contient, de préférence encore complémentairement au moins l'un des composants qui suivent :
0 à 5% en poids d'au moins un adjuvant de dispersion
0 à 15% en poids d'au moins un régulateur de viscosité
0 à 20% en poids d'au moins un fluidifiant ou plastifiant et/ou d'un retardateur de prise et/ou d'un accélérateur de prise et
0 à 30% en poids d'au moins un composé inorganique contenant du phosphore et
24 à 94% en poids d'eau.

13. Dispersion suivant la revendication 11 ou 12, caractérisée en ce que les polymères émulsionnés ou dispersés dans de l'eau sont choisis parmi des durcisseurs du type polyamine ou polyaminés et des résines époxydes sans groupes hydroxyle émulsionnées dans de l'eau, des homopolymères et copolymères d'esters vinyliques, d'esters de l'acide acrylique, du styrène, du butadiène et de composés vinyliques halogénés, dispersés dans de l'eau.

14. Dispersion suivant l'une quelconque des revendications 11 à 13, caractérisé en ce qu'outre les polymères émulsionnés et/ou dispersés dans l'eau, la dispersion contient encore au moins un polymère dissous dans de l'eau, de préférence un polymère choisi dans le groupe formé par les polymères dissous dans de l'eau qui suivent :
résines d'amino-s-triazine sulfonées, résines de mélamine et d'acide sulfamique, résines d'urée, résines d'aldéhydes d'acides sulfoniques aromatiques et résines carboxylées.

15. Dispersion suivant l'une quelconque des revendications 11 à 14, caractérisée en ce qu'elle contient de l'acide polyacrylique à titre d'adjuvant de dispersion.

16. Dispersion suivant l'une quelconque des revendications 1 à 15, caractérisée en ce que, à titre de régulateur de viscosité, elle contient des alcools monofonctionnels et/ou polyfonctionnels et/ou des éthers glycoliques et/ou des composés de la formule générale 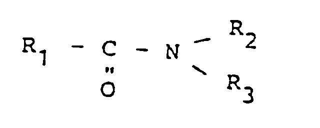 dans laquelle
R₁ représente un radical NH₂- ou -(CH₂)ₙ-,
R₂ représente un atome d'hydrogène ou un radical -(CH₂)ₘ-,
R₃ représente un atome d'hydrogène ou un radical alkyle, plus particulièrement -CH₃,
n et m représentant chacun des nombres dont la valeur varie de 1 à 5.

17. Dispersion suivant l'une quelconque des revendications 11 à 16, caractérisée en ce que, à titre de fluidifiant, elle contient des résines de mélamine et de formaldéhyde sulfonées, des résines de naphtalène et de formaldéhyde sulfonées, des ligninesulfonates, des sels d'acides polyhydroxycarboxyliques; à titre de retardateurs de prise, des composés polyhydroxylés, des phosphates; et à titre d'accélérateurs de prise, de l'hydroxyde d'aluminium, du sulfate de calcium.

18. Dispersion suivant l'une quelconque des revendications 11 à 17, caractérisée en ce qu'elle contient, à titre de composé contenant du phosphore, de l'acide ortho, pyro ou poly-phosphorique ou leurs sels à réaction acide à cations mono- et polyvalents.

19. Utilisation de la dispersion aqueuse, à modification polymérique, suivant l'une quelconque des revendications 11 à 18 pour la fabrication d'un matériau pour la construction et/ou le bâtiment.
